Europäisches Patentamt

**European Patent Office**

Office européen des brevets

(11) Numéro de publication: **0 051 100**
**A1**

(12) **DEMANDE DE BREVET EUROPEEN**

(21) Numéro de dépôt: **80401574.1**

(22) Date de dépôt: **04.11.80**

(51) Int. Cl.³: **B 60 J 7/24**
**B 62 D 33/06**

(43) Date de publication de la demande:
**12.05.82 Bulletin 82/19**

(84) Etats contractants désignés:
**CH DE FR IT LI**

(71) Demandeur: **ETS BUISARD & CIE**
**28, rue Gambetta**
**F-72300 Sable-sur-Sarthe(FR)**

(72) Inventeur: **Buisard, Max Marcel**
**Impasse Renaudeau**
**F-72300 Sable-sur-Sarthe(FR)**

(74) Mandataire: **Hoisnard, Jean-Claude et al,**
**Cabinet Beau de Lomenie 55, rue d'Amsterdam**
**F-75008 Paris(FR)**

(54) Arceau de sécurité pivotant pour véhicule, notamment pour tracteur porte-outils.

(57) L'invention est relative à un arceau de sécurité 2 monté pivotant sur la structure d'un véhicule 1 entre deux positions, dites position de protection et position escamotée, et, susceptible d'être maintenu dans sa position de protection au moyen d'un dispositif de blocage.

Cet arceau de sécurité est muni d'un dispositif moteur 19 de réglage de sa position apte à le faire pivoter de sa position escamotée à sa position de protection, une originalité consistant, depuis le siège du conducteur, et sans que celui-ci ait à descendre de son siège, à escamoter l'arceau de sécurité, devant tout obstacle, et à le remonter après avoir dépassé l'obstacle.

Une application est la réalisation d'un tracteur agricole présentant une sécurité satisfaisante.

Fig.1

EP 0 051 100 A1

Croydon Printing Company Ltd.

## Arceau de sécurité pivotant pour véhicule, notamment pour tracteur porte-outils.

De manière connue, des tracteurs agricoles sont munis d'arceaux de sécurité escamotables, qui, en position de service, évitent que le conducteur soit écrasé par le tracteur au cours d'un retournement accidentel de ce tracteur.

De tels arceaux connus sont montés pivotants par rapport à la structure du tracteur et peuvent être bloqués en position de protection, par exemple par des goupilles amovibles. Pour pouvoir les mettre en place, le conducteur doit descendre de son tracteur et manuellement, placer les goupilles en tournant autour du tracteur.

La manoeuvre est longue, pas toujours aisée à réaliser sur un terrain le plus souvent défoncé, et exige l'arrêt du tracteur. L'invention entend remédier à ces inconvénients en proposant une nouvelle disposition, bien entendu applicable aux tracteurs agricoles, mais plus généralement applicable à un véhicule.

L'invention est donc relative à un arceau de sécurité monté pivotant sur la structure d'un véhicule autour d'un axe de pivotement entre deux positions, dites position de protection et position escamotée, et, susceptible d'être maintenu dans sa position de protection au moyen d'un dispositif de blocage.

Cet arceau est muni d'un dispositif moteur de réglage de sa position apte à le faire pivoter de sa position escamotée à sa position de protection.

En outre, les avantageuses dispositions suivantes sont, de préférence, adoptées :

- le dispositif moteur de réglage de position est constitué par un vérin à fluide sous pression associé à un distributeur sélectif de fluide sous pression ;

- l'arceau de sécurité est muni d'un verrou de blocage dans sa position de protection, qui, d'une part, est commandé par l'arceau lui-même pour être placé dans ladite position de blocage, quand cet arceau parvient dans sa position de protection, d'autre part, comporte une commande volontaire de déverrouillage ;

- le verrou est, au repos, rappelé dans sa position de blocage par un organe élastique de rappel, est susceptible d'être écarté de cette position de blocage par une partie de l'arceau dont le trajet de pivotement interfère, en fin du pivotement de mise en position de protection de cet arceau, avec ledit verrou au repos, et, est rappelé en position de blocage après achèvement dudit pivotement de mise en position de protection, ladite partie de l'arceau cessant alors d'interférer avec ledit verrou ;

- la commande volontaire de déverrouillage est constituée par un levier qui est attelé au verrou en étant apte à en provoquer un déplacement le plaçant hors du trajet complet de pivotement de ladite partie de l'arceau, et, qui est susceptible d'être placé, dans la position de déverrouillage, en appui sur l'arceau qui, lors de son pivotement ultérieur vers sa position escamotée, libère ledit levier ;

- l'arceau de sécurité est muni d'un autre organe élastique de rappel qui, dans la position de protection dudit arceau, le maintient en appui sur ledit verrou placé dans sa position de repos ;

- ledit autre organe élastique de rappel est constitué par une butée progressive réalisée en élastomère.

L'invention a également pour objet un tracteur qui applique une ou plusieurs des dispositions précédentes et qui comporte une pompe hydraulique, le vérin à fluide étant un vérin hydraulique à simple effet dont l'unique chambre de travail est raccordée à ladite pompe hydraulique.

De manière avantageuse, un distributeur de fluide hydraulique est interposé entre ladite chambre de travail et la pompe, et comporte une commande volontaire de réglage de sa position qui est située, ainsi que la commande volontaire de déverrouillage du verrou, à proximité du poste de conduite du tracteur.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :

- la figure 1 est une vue en élévation d'un tracteur agricole conforme à l'invention ;

- la figure 2 est une vue schématique de dessus du tracteur de la figure 1 ;

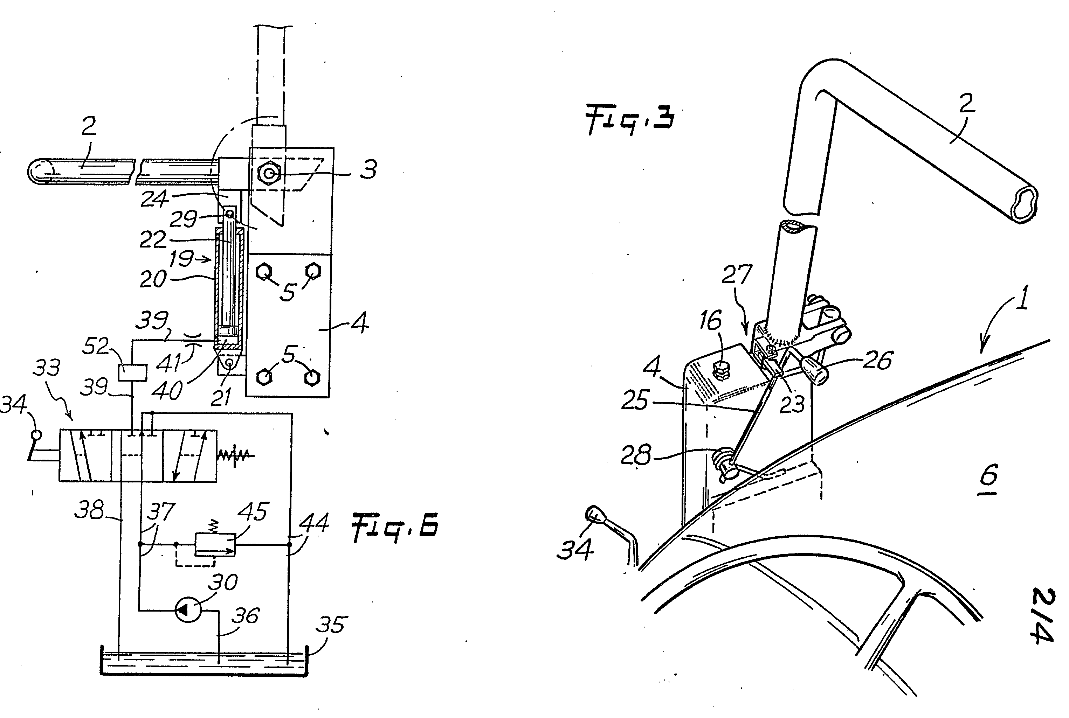

- la figure 3 est une perspective suivant flèche $\underline{F}$ de la figure 2 ;

- la figure 4 est une coupe perpendiculaire à l'axe de pivotement de l'arceau, suivant IV-IV de la figure 5, de l'arceau de sécurité équipant le tracteur des figures 1 à 3 ;

- la figure 5 est une coupe suivant V-V de la figure 4 ;

- la figure 6 représente le schéma du circuit de commande de la position de l'arceau des figures 4 et 5.

- la figure 7 représente une variante du circuit hydraulique de la figure 6 ; et,

- la figure 8 représente un détail de la réalisation déjà représentée sur les figures 3 et 5.

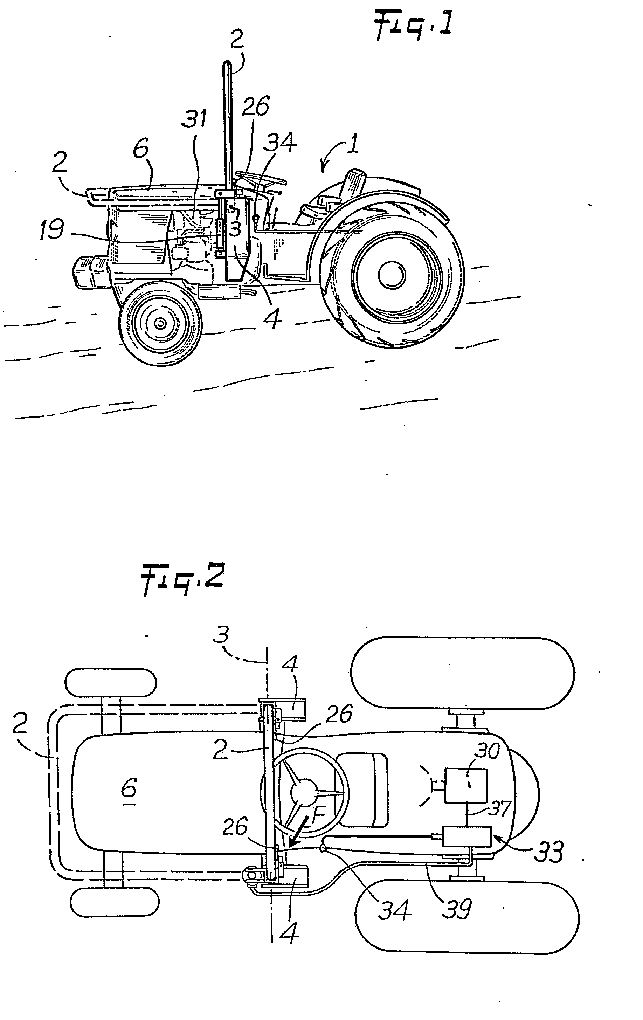

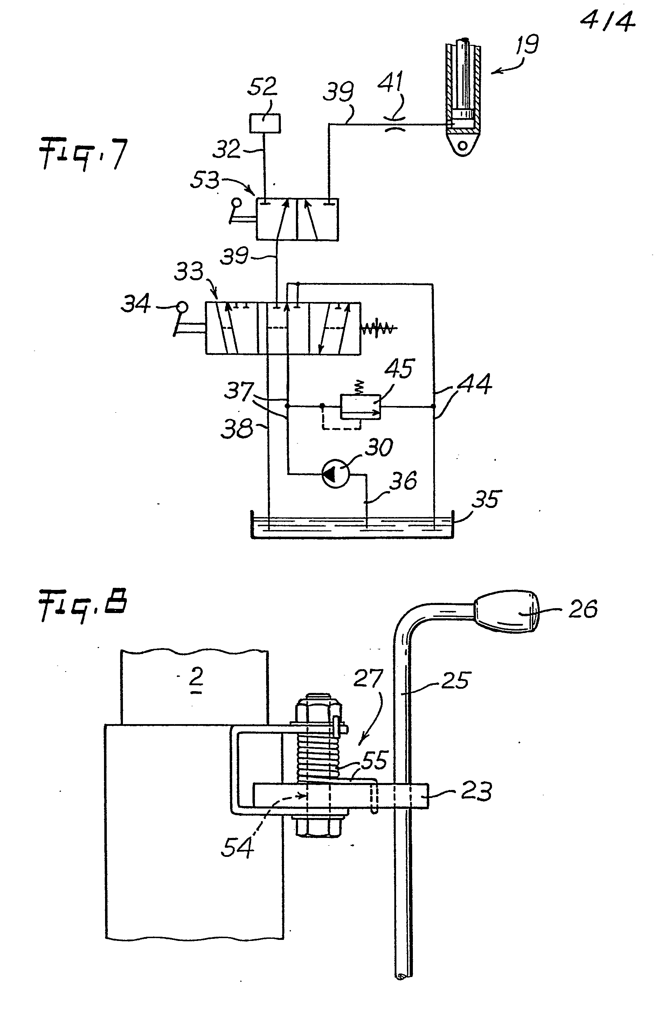

Les figures 1 et 2 représentent un tracteur agricole 1 sur lequel un arceau de sécurité 2, en forme de $\underline{U}$ est monté pivotant, chacune de ses branches étant montée pivotante autour d'un axe horizontal transversal 3, lui-même monté sur une structure 4 fixée au tracteur 1, par exemple par des vis 5 tel que représenté sur la figure 6.

L'arceau de sécurité 2 est susceptible d'occuper deux positions particulières : l'une, dite, position de protection du conducteur, est représentée en traits pleins sur les figures 1 et 2 ; l'autre, dite position escamotée, est représentée en traits interrompus. Dans la première position, les branches de l'arceau interdisent au tracteur, par hypothèse retourné à la suite d'un accident, de retomber sur le conducteur et de l'écraser ; dans la deuxième position, les branches sont disposées horizontalement le long du capot 6 du moteur du tracteur.

Sur la structure 4, sont montés :

- un axe de pivotement 7, parallèle à l'axe 3,

- une douille 8, qui est rendue solidaire de l'axe 7 par un bouton transversal 9,

- un premier appendice 10, formant butée, qui est soudé (11) sur la douille 8 et qui ne limite le pivotement, dans le sens de la flèche G, par rapport à la structure 4, en venant en contact de cette structure,

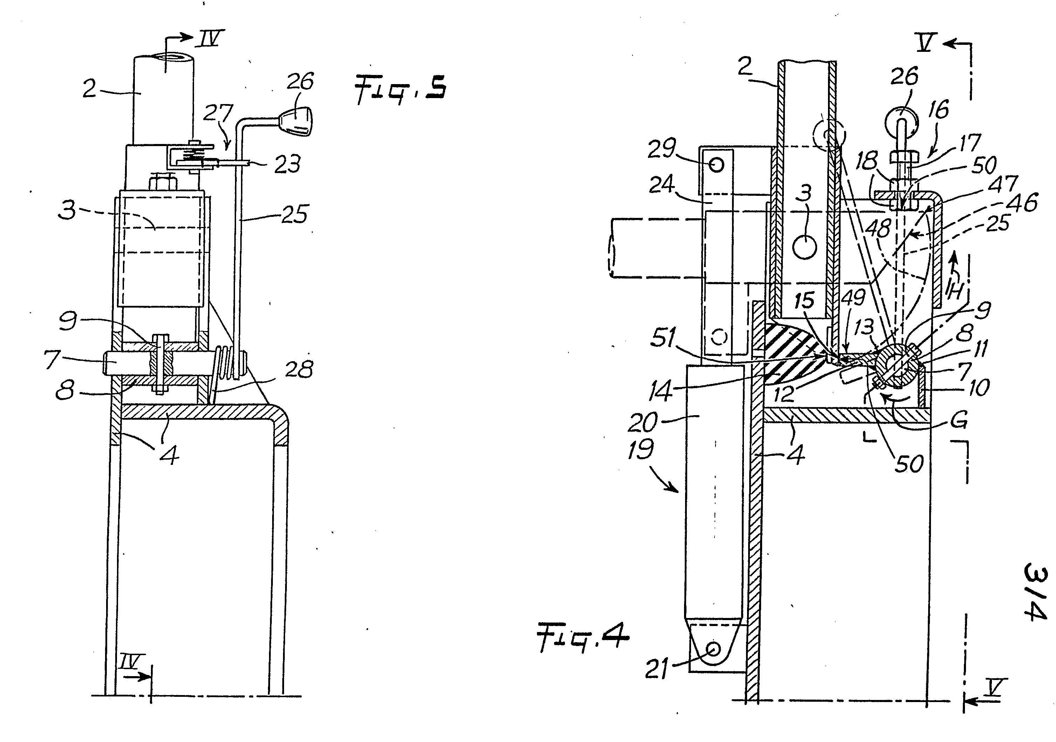

- un deuxième appendice 12, qui est également soudé (13) sur la douille 8, et qui, lorsque le premier appendice 10 est en c. tact avec la structure 4, s'étend horizontalement, pouvant cependi t être déplacé, par pivotement de l'axe 7 en sens opposé à la flèche G, en une position inclinée vers le bas, représentée en traits interrompus sur la figure 4,

- une butée progressive 14, réalisée en caoutchouc, qui est vissée sur la structure 4 et est disposée en regard de la tranche extrême 15 du deuxième appendice 12,

- une butée 16, constituée par une vis 17, fixée dans un orifice de la structure par deux écrous 18,

- un vérin hydraulique à simple effet 19, dont le cylindre 20 est articulé (21) sur la structure 4, et, dont la tige 22 est articulée (29) sur une patte 24 solidaire de la base d'un au moins des bras de l'arceau de sécurité 2,

- un levier 25,

. dont une extrémité est fixée sur l'axe 7,

. dont l'autre extrémité 26 constitue une manette de commande volontaire du pivotement de l'axe en sens opposé à la flèche G, et,

. dont la zone voisine de l'extrémité 26 peut s'accrocher sur un support d'accrochage escamotable 27, constitué par une plaque 23, montée pivotante sur la base pivotante de chacun des bras de l'arceau de sécurité 2 autour d'un axe 54 et rappelée en position par un ressort de torsion 55 qui en permet le pivotement, plaçant le levier 25 derrière la plaque 23 et le rappel de cette plaque en position de retenue du levier 25, celui-ci "échappant" hors d'appui de la plaque après un certain pivotement de l'arceau de sécurité, et enfin,

- un ressort 28, qui est interposé entre l'axe 7 et la structure 4, et dont l'effet est de rappeler le deuxième appendice 12, qui constitue comme cela va être précisé plus loin, un verrou, en une position de blocage, correspondant à l'appui du premier appendice 10 sur la structure 4.

Le circuit de commande du vérin 19 est représenté sur la figure 6 et comporte essentiellement

- une pompe hydraulique 30, qui, en l'espèce, est celle dont est déjà équipé le tracteur 1 et qui est entraînée par le moteur thermique 31 de ce tracteur,

- un distributeur 33 à trois positions, muni d'une manette de commande 34, et,

- un réservoir de fluide hydraulique 35.

La pompe 30 est reliée, par son conduit d'aspiration 36 au réservoir 35, et, par son conduit de refoulement 37 au distributeur 33. Un conduit 38 relie le distributeur 33 au réservoir 35, cependant qu'un conduit 39 relie ce même distributeur à l'unique chambre de travail 40 du vérin 19, avec interposition :

- soit du coupleur hydraulique 52 d'origine, si celui-ci n'est pas utilisé,

- soit d'une vanne trois voies 53, qui laisse disponible le coupleur hydraulique 52,

et, dans chaque cas, d'une restriction de valeur fixe 41. Enfin, un conduit 44 relie le distributeur 33 au réservoir 35, afin de dévier le fluide débité par la pompe 30, quand celui-ci n'est pas dirigé vers la chambre de travail 40 du vérin 19.

Un clapet de décharge taré 45, destiné à protéger la pompe 30 des surpressions, est disposé entre le conduit de refoulement 37 et le conduit 44.

Les trois positions du distributeur 33 correspondent :

- la première position, à la mise en communication des conduit 37 et 44, et, à l'obturation des conduits 39 et 38 ;

- la deuxième position, à la mise en communication des conduits 37 et 39, et, à l'obturation du conduit 38 ; et,

- la troisième position, à la mise en communication des conduits 38 et 39 d'une part, et des conduits 37 et 44 d'autre part.

Par construction, seule la première position est stable.

La figure 7 montre le branchement de la vanne 53 précitée, qui comporte deux positions, et à laquelle est relié, par un conduit 32, ledit coupleur hydraulique 52.

Les deux positions de la vanne 53 correspondent :

- la première position, à la mise en communication des deux tronçons du conduit 39, qui y sont raccordés, et à l'obturation du conduit 32 ; et,

- la deuxième position, à la mise en communication du tronçon du conduit 39 raccordé au distributeur 33 et du conduit 32, et, à l'obturation de l'autre tronçon du conduit 39 (raccordé au vérin 19).

Il convient de noter encore les points suivants :

- l'extrémité inférieure de chaque bras de l'arceau de sécurité 2 est conformée en un biseau (46), dont l'arête 47 de l'angle aigu possède un trajet 48, lors du pivotement de l'arceau de sécurité 2, qui interfère avec la face supérieure 49 du deuxième appendice 12 dans la position de blocage occupée par cet appendice ;

- en fin de pivotement de l'arceau de sécurité, l'arête 47, après avoir poussé la face supérieure 49 du deuxième appendice 12 et avoir ainsi provoqué un pivotement de l'axe 7 dans le sens opposé à la flèche G, échappe hors de contact de cette face supérieure 49, de sorte que l'axe 7 et les appendices qui en sont solidaires, reprennent leur position de repos sous l'effet du ressort 28, soit, en ce qui concerne le deuxième appendice 12, sa position de blocage ;

- en effet, la face "externe" 50 de chaque bras de l'arceau de sécurité 2, adjacente à l'arête 47, est alors disposée en regard de la tranche 15 du deuxième appendice 12, qui interdit tout pivotement dudit arceau de sécurité dans le sens de la flèche H mettant cet arceau de sécurité de sa position de protection dans sa position escamotée ;

- enfin, la face "interne" 51 de chaque bras de l'arceau de sécurité 2, adjacente à l'arête 47, est en appui sur la butée progressive 14, qui la repousse et met la face "externe" 50 en appui sur la tranche 15. L'arceau de sécurité est alors "verrouillé" dans sa position de protection.

La mise en place de cet arceau de sécurité 2 de sa position escamotée dans sa position de protection a été commandée par le conducteur déjà installé à son poste de conduite, par simple mise en place du distributeur 33 dans sa deuxième position, au moyen de la manette 34, située, à cet effet, à proximité du poste de conduite. Le fluide sous pression refoulé par la pompe 30 est dirigé vers la chambre de travail 40 du vérin 19 et pousse la tige 22 à l'intérieur du cylindre 20 dans le sens d'élévation de l'arceau de sécurité, provoquant un pivotement dans le sens opposé à la flèche H. Ce pivotement se poursuit jusqu'au "verrouillage" de l'arceau de sécurité dans sa position de protection, tel que cela a déjà été décrit. Le verrouillage étant obtenu, le distributeur 33 est placé dans sa troisième position, la pression à l'intérieur de la chambre de travail 40 s'annule, la butée progressive 14 met alors la face externe 50 en appui sur la tranche 15 du verrou 12. Le distributeur 33 est enfin ramené à sa première position.

Ce pivotement, animé par le vérin 19, pour n'être pas trop violent, est légèrement freiné par la restriction 41.

Pour escamoter l'arceau de sécurité, la manoeuvre est tout aussi simple. Il suffit au conducteur, sans quitter son poste de conduite :

a) de placer le distributeur 33 dans sa deuxième position (cela comprime la butée progressive 14 et rend plus aisée la manoeuvre des manettes 26) ;

b) de pousser les manettes 26, accessibles depuis ce poste de conduite, jusqu'à placer ces leviers en appui sur les supports d'accrochage 27 ;

c) de placer le distributeur 33 dans sa troisième position, et,

d) de pousser légèrement sur l'arceau de sécurité pour le faire pivoter dans le sens de la flèche H.

8

L'action sur les leviers 25 a provoqué le pivotement, dans le sens opposé à la flèche G, du verrou 12 de chaque bras de l'arceau de sécurité, libérant le pivotement dudit bras dans le sens de la flèche H. Le fluide contenu dans la chambre de travail 40 du vérin 19 peut retourner au réservoir 35 par les conduits 39, et 38, à travers le distributeur 33. L'arceau de sécurité se replace lui-même dans sa position escamotée sous l'effet de son propre poids.

A noter qu'après un certain pivotement dans le sens de la flèche H, les supports d'accrochage 27 laissent échapper les leviers 25 correspondants, qui, sous l'effet des ressorts 28, sont rappelés automatiquement dans la position "repos", correspondant à la position de blocage de chaque verrou 12.

En fin de pivotement d'escamotage, la face "externe" 50 de chaque bras de l'arceau de sécurité vient en appui sur la butée 16, réglable en position.

L'invention n'est pas limitée à la réalisation décrite, mais en couvre au contraire toutes les variantes qui pourraient lui être apportées sans sortir de son cadre, ni de son esprit.

REVENDICATIONS

1. Arceau de sécurité (2) monté pivotant sur la structure d'un véhicule (1) autour d'un axe de pivotement (3) entre deux positions, dites position de protection et position escamotée, et, susceptible d'être maintenu dans sa position de protection au moyen d'un dispositif de blocage, caractérisé en ce qu'il est muni d'un dispositif moteur (19) de réglage de sa position apte à le faire pivoter de sa position escamotée à sa position de protection.

2. Arceau de sécurité selon la revendication 1, caractérisé en ce que le dispositif moteur de réglage de position est constitué par un vérin (19) à fluide sous pression associé à un distributeur sélectif (33) de fluide sous pression.

3. Arceau de sécurité selon l'une quelconque des revendications 1 et 2, caractérisé en ce qu'il est muni d'un verrou (12-15) de blocage dans sa position de protection, qui, d'une part, est commandé (48) par l'arceau lui-même (47) pour être placé dans ladite position de blocage, quand cet arceau parvient dans sa position de protection, d'autre part, comporte une commande volontaire (26) de déverrouillage.

4. Arceau de sécurité selon la revendication 3, caractérisé en ce que le verrou (12-15) est

- au repos, rappelé dans sa position de blocage par un organe élastique de rappel (28),

- susceptible d'être écarté de cette position de blocage par une partie (47) de l'arceau (2) dont le trajet de pivotement (48) interfère, en fin du pivotement de mise en position de protection de cet arceau, avec ledit verrou (49-12) au repos, et,

- rappelé (28) en position de blocage après achèvement dudit pivotement de mise en position de protection, ladite partie (47) de l'arceau cessant alors d'interférer avec ledit verrou (49-12).

5. Arceau de sécurité selon l'une quelconque des revendications 3 et 4, caractérisé en ce que la commande volontaire (26) de déverrouillage est constituée par un levier (25) qui est attelé au verrou (12) en étant apte à en provoquer un déplacement le plaçant hors du trajet complet (48) de pivotement de ladite partie (47) de l'arceau, et, qui est susceptible d'être placé, dans la position de déverrouillage, en appui (27) sur l'arceau (2) qui, lors de son pivotement ultérieur vers sa position escamotée, libère ledit levier (25).

6. Arceau de sécurité selon l'une quelconque des revendications 3 à 5, caractérisé en ce qu'il est muni d'un autre organe élastique de rappel (14) qui, dans la position de protection dudit arceau (2), le maintient en appui (50) sur ledit verrou (15-12) placé dans sa position de repos.

7. Arceau de sécurité selon la revendication 6, caractérisé en ce que ledit autre organe élastique de rappel (14) est constitué par une butée progressive réalisée en élastomère.

8. Tracteur automobile faisant application d'un arceau de sécurité selon l'une quelconque des revendications 1 à 7, caractérisé en ce que, de manière connue en soi, il comporte une pompe hydraulique (30), cependant que le vérin à fluide (19) est un vérin hydraulique à simple effet dont l'unique chambre de travail (40) est raccordée (39-33-37) à ladite pompe hydraulique (30).

9. Tracteur selon la revendication 8, et faisant application d'un arceau de sécurité selon l'une quelconque des revendications 3 à 7, caractérisé en ce qu'un distributeur de fluide hydraulique (33) est interposé entre ladite chambre de travail (40) et la pompe (30), et comporte une commande volontaire (34) de réglage de sa position qui est située, ainsi que la commande volontaire (26) de déverrouillage du verrou (12), à proximité du poste de conduite du tracteur.

Revendications amendées

9

REVENDICATIONS

1. Arceau de sécurité (2) monté pivotant sur la structure d'un véhicule (1) autour d'un axe de pivotement (3) entre deux positions, dites position de protection et position escamotée, susceptible d'être maintenu dans sa position de protection au moyen d'un dispositif de blocage, et, muni d'un dispositif moteur (19) de réglage de sa position apte à le faire pivoter de sa position escamotée à sa position de protection, caractérisé en ce qu'il est, en outre, muni d'un verrou (12-15) de blocage dans sa position de protection, qui, d'une part, est commandé (48) par l'arceau lui-même (47) pour être placé dans ladite position de blocage, quand cet arceau parvient dans sa position de protection, d'autre part, comporte une commande volontaire (26) de déverrouillage.

2. Arceau de sécurité selon la revendication 1, caractérisé en ce que le verrou (12-15) est

   - au repos, rappelé dans sa position de blocage par un organe élastique de rappel (28),

   - susceptible d'être écarté de cette position de blocage par une partie (47) de l'arceau (2) dont le trajet de pivotement (48) interfère, en fin du pivotement de mise en position de protection de cet arceau, avec ledit verrou (49-12) au repos, et,

   - rappelé (28) en position de blocage après achèvement dudit pivotement de mise en position de protection, ladite partie (47) de l'arceau cessant alors d'interférer avec ledit verrou (49-12).

3. Arceau de sécurité selon l'une quelconque des revendications 1 et 2, caractérisé en ce que la commande volontaire (26) de déverrouillage est constituée par un levier (25) qui est attelé au verrou (12) en étant apte à en provoquer un déplacement le plaçant hors du trajet complet (48) de pivotement de ladite partie (47) de l'arceau, et, qui est susceptible d'être placé, dans la position de déverrouillage, en appui (27) sur l'arceau (2) qui, lors de son pivotement ultérieur vers sa position escamotée, libère ledit levier (25).

4. Arceau de sécurité selon l'une quelconque des revendications 1 à 3, caractérisé en ce qu'il est muni d'un autre organe élastique de rappel (14) qui, dans la position de protection dudit arceau (2), le maintient en appui (50) sur ledit verrou (15-12) placé dans sa position de repos.

5. Arceau de sécurité selon la revendication 4, caractérisé en ce que ledit autre organe élastique de rappel (14) est constitué par une butée progressive réalisée en élastomère.

6. Tracteur automobile faisant application d'un arceau de sécurité selon l'une quelconque des revendications 1 à 5, caractérisé en ce que, de manière connue en soi, il comporte une pompe hydraulique (30), cependant que le dispositif moteur (19) est un organe moteur hydraulique à simple effet dont l'unique chambre de travail (40) est raccordée (39-33-37) à ladite pompe hydraulique (30).

7. Tracteur selon la revendication 6, et faisant application d'un arceau de sécurité selon l'une quelconque des revendications 1 à 5, caractérisé en ce qu'un distributeur de fluide hydraulique (33) est interposé entre ladite chambre de travail (40) et la pompe (30), et comporte une commande volontaire (34) de réglage de sa position qui est située, ainsi que la commande volontaire (26) de déverrouillage du verrou (12), à proximité du poste de conduite du tracteur.

**Fig.1**

**Fig.2**

Fig.3

Fig.5

Fig.5

Fig.4

Fig.7

Fig.8

**Office européen des brevets**

**RAPPORT DE RECHERCHE EUROPEENNE**

EP 80 40 1574

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| | US - A - 3 802 720 (ELLIS)<br>* En entier *<br><br>-- | 1,2,8 | B 60 J 7/24<br>B 62 D 33/06 |
| | DE - A - 2 856 236 (FISCHER)<br>* En entier *<br><br>-- | 1,2,8 | |
| A | DE - A - 2 225 885 (KETTLER) | 1 | |
| | ---- | | |

**DOMAINES TECHNIQUES RECHERCHES (Int. Cl. 3)**

B 60 J
B 62 D

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-01-1981 | SCHMAL |

OEB Form 1503.1 06.78